(19) Europäisches Patentamt
European Patent Office
Office européen des brevets

(11) **EP 4 193 337 B1**

(12) **EUROPEAN PATENT SPECIFICATION**

(45) Date of publication and mention
of the grant of the patent:
**04.03.2026 Bulletin 2026/10**

(21) Application number: **21746503.8**

(22) Date of filing: **02.08.2021**

(51) International Patent Classification (IPC):
**G06T 11/00** $^{(2026.01)}$    **G01J 3/46** $^{(2006.01)}$

(52) Cooperative Patent Classification (CPC):
**G06T 11/10; G01J 3/462**

(86) International application number:
**PCT/EP2021/071597**

(87) International publication number:
**WO 2022/029093 (10.02.2022 Gazette 2022/06)**

(54) **TEXTURE INTERPOLATION**

TEXTUR INTERPOLATION

INTERPOLATION DE TEXTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2020 EP 20189719**

(43) Date of publication of application:
**14.06.2023 Bulletin 2023/24**

(73) Proprietor: **BASF Coatings GmbH**
**48165 Münster (DE)**

(72) Inventor: **LANFER, Benjamin**
**48165 Muenster (DE)**

(74) Representative: **Coatings IP Association**
**BASF Coatings GmbH**
**Glasuritstraße 1**
**48165 Münster (DE)**

(56) References cited:
**WO-A1-2020/200982     US-A- 5 966 134**

• **TIM GOLLA ET AL: "Interactive Interpolation of
Metallic Effect Car Paints", January 2018
(2018-01-01) - January 2018 (2018-01-01), pages
Modeling and Visualization, XP055761530,
Retrieved from the Internet <URL:https://diglib.
eg.org/bitstream/handle/10.2312/vmv20181248/
011-020.pdf> DOI: 10.2312/vmv.20181248**
• **JAN KAUTZ ET AL: "Interactive editing and
modeling of bidirectional texture functions",
ACM TRANSACTIONS ON GRAPHICS, ACM, NY,
US, vol. 26, no. 3, 29 July 2007 (2007-07-29),
pages 53 - es, XP058336111, ISSN: 0730-0301,
DOI: 10.1145/1276377.1276443**

## Description

### Field of the invention

The present disclosure relates to a method for generating a digital representation of coatings on car parts. The method provides improved texture blending for the rendering of car paint sparkle. The present disclosure also refers to a respective computer system.

### Background

Current car paint color design processes are based on physical samples of a car paint applied to most often small flat panels. Working only with physical samples has several drawbacks. Painting the samples is costly and takes time. In addition, due to cost only small flat panels are painted and it can be difficult to infer from the small samples how a coating would look like on a different three-dimensional shape, for example, a car body, or in a different light setting. Car paints are often chosen as effect colors with gonioapparent effects particularly caused by interference and/or metallic pigments, such as metallic flake pigments or special effect flake pigments, such as, pearlescent flake pigments.

Using a digital model of an appearance of the car paint it is possible to computer-generate images of the car paint applied to an arbitrary shape in arbitrary light conditions. A bidirectional texture function (BTF) represents such a digital model that can capture also a spatially varying appearance of a car paint, such as sparkling. Based on computer-generated images of the car paint applied to an object it is possible to virtually assess characteristics of a color of the car paint.

The BTF is a representation of the appearance of texture as a function of viewing and illumination direction, i.e. viewing and illumination angle. BTF is typically captured by imaging the surface at a sampling of the hemisphere of possible viewing and illumination directions. BTF measurements are collections of images. The BTF is a 6-dimensional function. (Dana, Kristin J., Bram van Ginneken, Shree K. Nayar, and Jan J. Koenderink. 'Reflectance and Texture of Real-World Surfaces'. ACM Transactions on Graphics 18, no. 1 (1 January 1999): 1-34. https://doi.org/10.1145/300776.300778.)

PCT/EP2020/058444 discloses a method for generating a bi-directional texture function (BTF) of an object. The method comprises measuring an initial BTF for the object using a camera-based measurement device, capturing spectral reflectance data for the object for a pre-given number of different measurement geometries using a spectrophotometer, and adapting the initial BTF to the captured spectral reflectance data to obtain an optimized BTF.

EP20182808.4 discloses a process for the visualization of painted car parts. The process is based on the measurement and optimization of a bidirectional texture function (BTF) of the paint and subsequent simulation of the appearance of the paint on a 3D object using rendering software. The BTF also includes texture images that represent the sparkling of the paint's effect pigments for different viewing and illumination geometries. Naturally, it is not possible to capture and store sparkling images for all possible observation and illumination directions. During rendering, when evaluating the BTF, it is thus necessary to interpolate the sparkling image at the given geometry from the sparkling images at the closest recorded neighboring geometries. Linear interpolation is used which causes a strong reduction in intensity of the sparse sparkling points and, thus, reduced contrast and depth. Thus, the rendered sparkling lacks contrast and depth, and the dynamics of the sparkle points under changing observation or lighting conditions is not plausible. Furthermore, halo-like artifacts of reduced contrast can be observed in the sparkling.

Tim Golla ET AL: "Interactive Interpolation of Metallic Effect Car Paints", January 2018, Modeling and Visualization, DOI: 10.2312/vmv.20181248 discloses a method that allows for interactive interpolation between measured metallic automotive paints, which can be used to generate new realistic-looking metallic paint materials. By clustering the colour information present in the measured bidirectional texture function (BTF) responsible for the metallic sparkling effect, an optimal transport problem between metallic paints' appearances was set up.

US 5 966 134 A discloses for automatically creating cel images used in an animation that have a desired characteristic appearance.

It is an object of the present disclosure to provide a method for generating a more realistic and plausible digital representation of a car paint's sparkling and a more realistic visualization of car parts with effect pigment coatings.

### Summary

The present disclosure provides methods for generating a digital representation of coatings on car parts and computer systems implementing the methods, respectively, with the features of the independent claims. Further features and embodiments of the claimed methods and systems are described in the dependent claims and in the description.

The method uses improved texture blending for the rendering of car paint sparkle. Instead of a linear interpolating function, a smoothstep function centered on a random transition point is used to interpolate pixel values from neighboring texture images. In this way, the interpolated histogram, and thus the contrast, is preserved. In addition, the sparkling dynamics of the coated surface under changing viewing and lighting conditions are rendered more lifelike.

**Detailed description**

According to the present disclosure, a bi-directional texture function (BTF) of a car paint is used to render a representation of an object coated with the car paint which accurately reproduces the optical appearance of the object, in particular, the colors and color effects, at a given illumination of the object.

In the context of the present disclosure, the term "render" is used to describe the automatic process of generating a photorealistic image of an object by means of a computer program.

The present disclosure provides a method for generating a digital representation of a car part coated with a paint comprising effect pigments The method involves using a bi-directional texture function (BTF) of the paint which comprises a plurality of texture images representing the sparkling of the paint's effect pigments for different viewing and illumination directions for simulating the appearance of the paint on a 3D object using rendering software. In the method of the present disclosure, a smoothstep function $S_1(x) = S_1\big(x^+(x^*, t_n, w)\big) = S_1\left(\frac{x^* - t_n + \frac{w}{2}}{w}\right)$ in an interval with width w around a random transition point $t_n$ is used to interpolate pixel values at the local coordinate x* between the plurality of texture images. In this formula, $x^+$ corresponds to the coordinate transformation with the interval with width w and the transition point $t_n$ which is dependent on the parameter x* describing the local coordinate $\theta_i^*$ or $\theta_h^*$ described later on.

In order to reflect the texture of the object correctly, the BTF comprises a table of spatial texture images depending on illumination and observation angle and direction ("geometry"). As it is not possible to capture and store sparkling images for all possible observation and illumination directions (geometries), it is necessary to interpolate the sparkling image at the given geometry from the sparkling images at the closest recorded neighboring geometries during rendering.

To preserve the contrast of the interpolated texture images, a new interpolation scheme was developed. Instead of using a linear interpolation function, a smoothstep function centered around a random transition point is used to interpolate pixel values from neighboring texture images. Smoothstep is a family of sigmoid-like interpolation and clamping functions. The function depends on three parameters, the input x, the "left edge" and the "right edge", with the left edge being assumed smaller than the right edge. The function receives a real number x as an argument and returns 0 if x is less than or equal to the left edge, 1 if x is greater than or equal to the right edge, and smoothly interpolates, using a Hermite polynomial, between 0 and 1 otherwise. The gradient of the smoothstep function is zero at both edges. This is convenient for creating a sequence of transitions using smoothstep to interpolate each segment as an alternative to using more sophisticated or expensive interpolation techniques. A smoothstep function can be used to describe the transition from one value to another value across a given parameter interval. In the method of the present disclosure, an interval with a fixed width much smaller than the distance between two geometries and centered around a certain transition point is chosen.

The interval width w is to be understood in the context of the previously listed smoothstep function $S_1(x)$ and determines how fast the transition between the pixel intensities of two neighboring texture images occurs. A value of w = 0 results in an abrupt transition between the pixel intensities. A value of w = 1 results in a slow transition, where pixel intensities are interpolated across the complete distance between the neighboring texture images.

Suitable values for w should preserve the contrast of the interpolated image and create a plausible transition between pixel intensities. Such values can be identified experimentally by varying the value of w, interpolating images for changing illumination and observation conditions with the varying values of w, and observing the contrast and transition between pixel intensities in the interpolated images. According to a particularly preferred embodiment of the present invention, a value of w = 0.05 is used. For values of $w > 0.05$, pixel values have to be interpolated for more pixels of the texture image which again decreases the contrast of the interpolated image. For values of w < 0.05, the transition subjectively appears to be too abrupt and thus implausible.

The stochastic nature of the sparkle image allows for interpolating the individual pixels of the sparkling image independently from each other. This means that the transition point can be chosen randomly for each pixel in the sparkle image.

In effect, for a given geometry, only few pixel values are interpolated using the smoothstep function to compute the weights. For all other pixels, values from either one of the neighboring sparkle images are chosen. The closer the given geometry is to a neighboring geometry, the more pixel values are chosen from the neighboring geometry's sparkling image.

The resulting interpolated sparkling images have a more lifelike appearance. The contrast is preserved, and no halo-like artifacts are observed. In addition, the histograms of the sparkling images also are continuously interpolated. Further, the sparkling dynamics under changing viewing and lighting conditions are more realistic.

In one embodiment of the method, the texture images are sRGB texture images. In the context of the present disclosure, the term "sRGB" (standard Red Green Blue) denotes an RGB color space as defined in IEC 61966-2-1:1999. In one embodiment of the method, the texture images are represented in the linear sRGB colorspace, which does not include the gamma companding. Linear sRGB and sRGB values can be transformed into each other without a loss of information. Linear sRGB values are used because the rendering engines work with linear values as those can be directly related to the physical quantities, e.g., light intensities and reflectivities.

The bi-directional texture function (BTF) of an object can be generated using a system comprising:

- a camera-based measurement device which is configured to measure an initial BTF for the object,
- a spectrophotometer which is configured to capture spectral reflectance data for the object for a pre-given number of different measurement geometries,
- a computing device which is in communicative connection with the camera-based measurement device and with the spectrophotometer, respectively, and which is configured to receive via the respective communicative connection the initial BTF and the captured spectral reflectance data for the object, and to adapt the initial BTF to the captured reflectance data, thus gaining an optimized BTF.

The system may further comprise a database which is configured to store the initial BTF, the spectral reflectance data for the object for the pre-given number of different measurement geometries and the optimized BTF. The computing device may be in communicative connection with the database in order to retrieve the initial BTF and the spectral reflectance data for the object for the pre-given number of different measurement geometries and to store the optimized BTF. That means that the initial BTF gained from the camera-based measurement device and the spectral reflectance data captured by the spectrophotometer may be first stored in the database before the computing device retrieves the initial BTF and the spectral reflectance data in order to adapt the initial BTF to the captured reflectance data, thus gaining the optimized BTF. In this scenario, the camera-based measurement device and the spectrophotometer are also in communicative connection with the database. Thus, both the communicative connection between the computing device and the camera-based measurement device and the communicative connection between the computing device and the spectrophotometer may be a direct connection or an indirect connection via the database, respectively. Each communicative connection may be a wired or a wireless connection. Each suitable communication technology may be used. The computing device, the camera-based measurement device and the spectrophotometer, each may include one or more communications interface for communicating with each other. Such communication may be executed using a wired data transmission protocol, such as fiber distributed data interface (FDDI), digital subscriber line (DSL), Ethernet, asynchronous transfer mode (ATM), or any other wired transmission protocol. Alternatively, the communication may be wirelessly via wireless communication networks using any of a variety of protocols, such as General Packet Radio Service (GPRS), Universal Mobile Telecommunications System (UMTS), Code Division Multiple Access (CDMA), Long Term Evolution (LTE), wireless Universal Serial Bus (USB), and/or any other wireless protocol. The respective communication may be a combination of a wireless and a wired communication.

The computing device may include or may be in communication with one or more input units, such as a touch screen, an audio input, a movement input, a mouse, a keypad input and/or the like. Further the computing device may include or may be in communication with one or more output units, such as an audio output, a video output, screen/display output, and/or the like.

In one embodiment of the method, the BTF used is a special BTF, which is generated by a process comprising at least the following steps:

- measuring an initial BTF for the object using a camera-based measurement device,
- capturing spectral reflectance data for the object for a pre-given number, i.e. a limited number of different measurement geometries using a spectrophotometer,
- adapting the initial BTF to the captured spectral reflectance data, thus, gaining an optimized BTF.

To improve color accuracy it is proposed that, in a first step, an initial BTF of a physical car paint sample is acquired using the camera-based measurement device. Then, in a second step, a second spectral measurement is performed on the same sample using a spectrophotometer, particularly a handheld spectrophotometer. Thus, additional, more accurate spectral reflectance data for a small number (e. g. < 25) of measurement geometries are obtained. The initial BTF is then enhanced with the more accurate but sparse spectral reflectance data. The result is a BTF which captures the color and the spatially varying appearance, such as sparkling of the car paint sample and is sufficiently accurate.

According to one embodiment, the camera-based measurement device creates a plurality of images (photos) of the object/sample at different viewing angles, at different illumination angles, at different illumination colors and/or for different exposure times, thus providing a plurality of measurement data considering a plurality of combinations of illumination angle, viewing angle, illumination color and/or exposure time. The camera-based measurement device can be a commercially available measurement device, such as, for example, the X-Rite TAC7®. A small flat panel coated with the car paint sample and a clear-coat is inserted into the measurement device and the measurement process is started. From the measurement and a subsequent post-processing the initial BTF is obtained.

In the course of the post-processing, the images/photos with different illumination color and different exposure time, but with equal illumination angle and viewing angle are combined into images with high dynamic range, respectively. Further, the perspective of the photos onto the sample is corrected. On the basis of the data gained by the photos and the post-processing, the parameters of the initial BTF are determined.

According to a further embodiment, adapting the initial BTF to the captured spectral reflectance data to obtain an optimized BTF comprises segmentation of the initial BTF into different terms, each term comprising a set of parameters, and optimizing the parameters of each term separately using the captured spectral reflectance data.

The initial BTF is segmented (divided) into two main terms, a first term being a homogeneous bi-directional reflectance distribution function (BRDF) which describes reflectance properties of the object, e.g. the car paint sample, depending only on the measurement geometry, and a second term being a texture function which accounts for a spatially varying appearance of the object, i.e., which adds a view and illumination dependent texture image. The texture images stored in the model have the property that on average across all pixels the sum of the intensities in each of the RGB channels is zero. When viewed from afar, the overall color impression of the car paint is determined not by the color at a single point but by the average color of a larger area. Due to the above-mentioned property it is assumed that the average color across a larger region of the texture image is zero or close to zero. This allows for overlaying the texture image without changing the overall color. This also means that the texture images can be ignored when optimizing the BTF.

For the representation of the BTF, the color model first introduced by Rump et al. (Rump, Martin, Ralf Sarlette, und Reinhard Klein. "Efficient Resampling, Compression and Rendering of Metallic and Pearlescent Paint", in Vision, Modeling, and Visualization, 11-18, 2009.) is used:

$$\mathrm{f}(\boldsymbol{x}, \bar{\boldsymbol{\imath}}, \overline{\boldsymbol{o}}) = \chi(\bar{\boldsymbol{\imath}}, \overline{\boldsymbol{o}}) \left( \frac{a}{\pi} + \sum_{k=1}^{3} f_{S_k, \alpha_k, F_{0,k}}^{\mathrm{CT}}(\bar{\boldsymbol{\imath}}, \overline{\boldsymbol{o}}) \right) + \Xi(\boldsymbol{x}, \bar{\boldsymbol{\imath}}, \overline{\boldsymbol{o}}) \qquad (1)$$

with

$x$: Surface coordinates of the sample/object

$\bar{\imath}, \bar{o}$: Illumination and observation/viewing directions at the basecoat of the sample

$\chi(\bar{\imath}, \bar{o})$: Color table depending on illumination and observation direction

$a$: Albedo or diffuse reflectivity

$f_{S_k, \alpha_k, F_{0,k}}^{\mathrm{CT}}(\bar{\imath}, \overline{\boldsymbol{o}})$ : The k-th Cook-Torrance lobe; the Cook-Torrance lobe is a commonly used BRDF that describes the glossiness of a microfaceted surface

$S_k$: Weight for the k-th Cook-Torrance lobe

$\alpha_k$: Parameter for the Beckmann distribution of the k-th Cook-Torrance lobe

$F_{0,k}$: Fresnel reflectivity for the k-th Cook-Torrance lobe

$\Xi(x, \bar{\imath}, \bar{o})$: Table of spatial texture images depending on illumination and observation direction

Generally, the bidirectional reflectance distribution function (BRDF) is a function of four real variables that defines how light is reflected at an opaque surface. The function takes an incoming light direction $\bar{\imath}$ and an outgoing direction $\bar{o}$ and returns the ratio of reflected radiance exiting along $\bar{o}$ to the irradiance incident on the surface from direction $\bar{\imath}$. BRDF means a collection of photometric data of any material (herein meaning the object, i.e. the paint sample) that will describe photometric reflective light scattering characteristics of the material (the object) as a function of illumination angle and reflective scattering angle. The BRDF describes the spectral and spatial reflective scattering properties of the object, particularly of a gonioapparent material comprised by the object, and provides a description of the appearance of the material and many other appearance attributes, such as gloss, haze, and color, can be easily derived from the BRDF.

Generally, the BRDF consists of three color coordinates as a function of scattering geometry. The specific illuminant and the color system (for example CIELAB) must be specified and included with any data when dealing with the BRDF.

As can be recognized from equation (1), the first term, i.e. the BRDF is divided into a first sub-term corresponding to a color table $\chi(\bar{\imath}, \bar{o})$ and a second sub-term corresponding to an intensity function ( $\frac{a}{\pi} + \sum_{k=1}^{3} f_{S_k, \alpha_k, F_{0,k}}^{\mathrm{CT}}(\bar{\imath}, \overline{\boldsymbol{o}})$ ). The parameters of the initial BTF are optimized to minimize a color difference between the spectral reflectance data and the initial BTF by optimizing in a first optimization step the parameters of the color table while the parameters of the intensity function are kept constant, and by optimizing in a second optimization step the parameters of the intensity function while the parameters of the color table are kept constant.

The spectral reflectance data, i.e. the spectral reflectance curves are acquired only for a limited number of measurement geometries. Each such measurement geometry is defined by a specific illumination angle/direction and a specific viewing angle/direction. The spectral reflectance measurements are performed, for example, by a hand-held spectrophotometer, such as, for example, a Byk-Mac I® with six measurement geometries (a fixed illumination angle and viewing/measurement angles of -15°, 15°, 25°, 45°, 75°, 110°), an X-Rite MAT12® with twelve measurement geometries (two illumination angles and six angles of measurement), or an X-Rite MA 98® (two illumination angles and up to eleven angles of measurement). The spectral reflectance data obtained from these measurement devices are more accurate than the color information obtained from the camera-based measurement device.

According to a further embodiment, for the optimization of the color table in the first optimization step for each spectral measurement geometry first CIEL*a*b* values are computed from the spectral reflectance data (curves) and second CIEL*a*b* values are computed from the initial BTF, and correction vectors in a* and b* coordinates are computed by subtracting the second CIEa*b* values from the first CIEa*b* values and the correction vectors are component-wise interpolated and extrapolated for the complete range of viewing and illumination angles stored in the color table, the interpolated correction vectors are applied to the initial BTF CIEL*a*b* values for each spectral measurement geometry stored in the color table and the corrected BTF CIEL*a*b* values are transformed to linear sRGB coordinates which are normalized (so that their sum is, for example, equal to 3) and finally stored in the color table.

A multilevel B-Spline interpolation algorithm (see Lee, Seungyong, George Wolberg, und Sung Yong Shin. "Scattered data interpolation with multilevel B-splines". IEEE transactions on visualization and computer graphics 3, Nr. 3 (1997): 228-244.) can be used for the component-wise interpolation and extrapolation of the correction vectors.

According to still a further embodiment, for optimization of the parameters of the intensity function in the second optimization step, a cost function is defined based on the sum of the color differences across all spectral reflectance measurements geometries. The cost function $C(\alpha, \mathbf{S}, \mathbf{F_0}, a)$ is defined across all reflectance measurement geometries according to the following equation:

$$C(\boldsymbol{\alpha}, \mathbf{S}, \mathbf{F_0}, a) = \sum_{g \in G} \Delta E\big(f(x, \bar{\imath}, \bar{o}) \cdot F_{CC}(\boldsymbol{i}, \boldsymbol{o}), f_{\mathrm{Ref}}(\bar{\imath}, \bar{o})\big) + \mathrm{P}(\boldsymbol{\alpha}, \boldsymbol{S}, \boldsymbol{F_0}, a) \qquad (2)$$

with

$G$ : The set of measurement geometries for which spectral reflectance data is available

$g$ : One out of the set of measurement geometries

$\Delta E(f_{Test}, f_{Ref})$ : A weighted color difference formula measuring the difference between the colors $f_{Test}$ and $f_{Ref}$

$f_{Ref}(i, o)$: Reference color derived from spectral measurement

$f_{Test} = f(x, \bar{\imath}, \bar{o}) \cdot F_{CC}(i, o)$: Test color computed from the initial BTF for the given illumination and observation direction

$\alpha = (\alpha_1, \alpha_2, \alpha_3)$: Vector of parameters for the Beckmann distribution of the three Cook-Torrance lobes

$\mathbf{S} = (S_1, S_2, S_3)$ : Vector of weights for the three Cook-Torrance lobes

$\mathbf{F_0} = (F_{0,1}, F_{0,2}, F_{0,3})$: Vector of Fresnel reflections for the three Cook-Torrance lobes

$P(\alpha, S, F_0, a)$ : Penalty function

As indicated in equation (2) the cost function can be supplemented by a penalty function which is designed to take specific constraints into account, such constraints preferably comprise to keep the parameter values in a valid range.

To compute the color difference, the initial BTF is evaluated at the different spectral reflectance measurement geometries and the resulting CIEL*a*b* values are compared to the CIEL*a*b* values from the spectral reflectance measurements using a weighted color difference formula such as, for example, the formula defined in DIN6157/2, and the parameters of the intensity function are optimized using a non-linear optimization method, such as, for example the Nelder-Mead-Downhill-Simplex method, so that the cost function is minimized.

When optimizing the color table, for each spectral reflectance measurement geometry of the spectrophotometer a correction vector is determined. The correction vector results as the difference of the reflected radiance in the RGB channels from the BRDF part of the initial BTF and the spectral reflectance data for the same geometry, respectively. The computation of the correction vectors is performed in the CIEL*a*b* color space. The resulting correction vectors are interpolated component-wise over the entire parameter range of the color table.

According to still a further embodiment, the first and the second optimization steps are run repeatedly/iteratively to further improve an accuracy of the optimized BTF. The number of iterations can be specified and pre-defined. It has been found that three iterations can already yield reliable good results.

The BTF representation contains sparkle images only for a discrete number of geometries. A geometry can be specified by providing two angles: the angle $\theta_i$ between the halfway vector and the illumination direction, and the angle $\theta_h$ between the halfway vector and the normal. The halfway vector is the halfway vector between the illumination direction and the observation direction. Texture images are captured at $\theta_i$ and $\theta_h$ values at fixed intervals.

When evaluating the BTF for a geometry G = $(\theta_i, \theta_h)$ where no sparkle image was recorded, interpolation is necessary. The sparkling image is interpolated from the sparkling images $I_{00}(x)$, $I_{10}(x)$, $I_{01}(x)$, $I_{11}(x)$ recorded at the closest neighboring geometries $G_{00}(\theta_{i,0}, \theta_{h,0})$, $G_{10}(\theta_{i,1}, \theta_{h,0})$, $G_{01}(\theta_{i,0}, G_{h,1})$, and $G_{11}(\theta_{i,1}, \theta_{h,1})$, respectively.

When interpolating the image for a geometry G = $(\theta_i, \theta_h)$ from the neighboring images at the geometries $G_{00}$ = $(\theta_{i,0}, \theta_{h,0})$, $G_{10}(\theta_{i,1}, \theta_{h,0})$, $G_{01}(\theta_{i,0}, \theta_{h,1})$ and $G_{11}(\theta_{i,1}, \theta_{h,1})$, local coordinates are used which are defined as:

$$\theta_i^* = \frac{\theta_i - \theta_{i,0}}{\theta_{i,1} - \theta_{i,0}}, \quad \theta_h^* = \frac{\theta_h - \theta_{h,0}}{\theta_{h,1} - \theta_{h,0}}$$

Using bilinear interpolation, the interpolated image intensity is

$$I(\theta_i^*, \theta_h^*, x) = (1 - \theta_h^*)\big((1 - \theta_i^*) \cdot I_{00}(x) + \theta_i^* \cdot I_{01}(x)\big)$$
$$+ \theta_h^*\big((1 - \theta_i^*) \cdot I_{10}(x) + \theta_i^* \cdot I_{11}(x)\big)$$

with local coordinates

$$\theta_i^* = \frac{\theta_i - \theta_{i,0}}{\theta_{i,1} - \theta_{i,0}}$$

$$\theta_h^* = \frac{\theta_h - \theta_{h,0}}{\theta_{h,1} - \theta_{h,0}}$$

In these local coordinates, the distance between two neighboring geometries is always 1. The local coordinates depend on the fixed value w for the width of the transition interval as described later on.

For the interpolation scheme, the following one- and two-dimensional smoothstep functions are introduced:

$$S_1(x) = \begin{cases} 0 & x \le 0 \\ 3x^2 - 2x^3 & 0 < x < 1 \\ 1 & 1 \le x \end{cases}$$

$$S_1(x, y) = S_1(x) \cdot S_1(y)$$

In this form, the smoothstep function smoothly changes from 0 to 1 when the parameter x* changes from 0 to 1. An interval with width w, preferably with w = 0.05, around a transition point $t_n$ is defined. The smoothstep function

$$S_1\big(x^+(x^*, t_n, w)\big) = S_1\left(\frac{x^* - t_n + \frac{w}{2}}{w}\right)$$ then smoothly changes from 0 to 1 in the specified interval around the transition point.

Using the smoothstep function, the interpolated intensity is computed as

$$I(\theta_i^+, \theta_h^+, x) = S_1(\theta_i^+)S_1(\theta_h^+)I_{00}(x) + S_1(\theta_i^+)S_1(1 - \theta_h^+)I_{01}(x)$$
$$+ S_1(1 - \theta_i^+)S_1(\theta_h^+)I_{10}(x) + S_1(1 - \theta_i^+)S_1(1 - \theta_h^+)I_{11}(x)$$

wherein

$I(\theta_i^+, \theta_h^+, x)$      is the interpolated intensity of a pixel with local coordinates $\theta_i^+, \theta_h^+$ ,x;

$S_1(\theta_n^+)$      is the value of the smoothstep function at local coordinate $\theta_n^+$ ;

$I_{ab}(x)$      is the value of the pixel intensity of neighboring texture image *ab* at pixel location x.

For every pixel in the texture image, the transition point is once randomly chosen in the interval [w/2, 1- w/2]. Here,

$$\theta_i^+(\theta_i^*, t_n, w) = \frac{\theta_i^* - t_n + \frac{w}{2}}{w}$$

$$\theta_h^+(\theta_h^*, t_n, w) = \frac{\theta_h^* - t_n + \frac{w}{2}}{w}$$

are the local coordinates of the geometry angles relative to the pixel's transition interval. Setting a random transition point is only done once for each pixel, e.g., when initializing the material. After that, the set transition point is used whenever the texture is rendered.

In the implementation in a shader program, the texture images to be interpolated are stored as textures. An additional texture stores the random transition points. When zooming into the BTF, interpolation is also necessary for the spatial location x on the sample. During rendering, the interpolation approach of the present disclosure first is used to interpolate values at the pixels neighboring the location x. Then the interpolated pixel value at x is computed from these values using linear interpolation.

The present disclosure also relates to a computer system comprising:

- a computer unit;
- a computer readable program with program code stored in a non-transitory computer-readable storage medium, the program code causing the computer unit, when the program is executed on the computer unit,

   to use a bi-directional texture function (BTF) of a paint comprising effect pigments to generate a representation of an object coated with the paint which accurately reproduces the visual appearance of the object at a given viewing and illumination direction of the object,
   the representation being generated using a 3D render engine which interpolates a texture image at the given viewing and illumination direction from texture images present in the BTF representing neighboring viewing and illumination directions using a smoothstep function $S_1(x) = S_1(x^+(x^*, t_n, w)) = S_1\left(\frac{x^* - t_n + \frac{w}{2}}{w}\right)$ in an interval with width w around a random transition point $t_n$ at the local coordinate $x^*$.

In one embodiment, an implementation of the improved rendering approach uses OpenGL and C++.

In a further embodiment, the representation of the object is generated using a real-time render engine. A 3D render engine simulates or approximates the light propagation within a virtual 3D light scene under consideration of the optical (reflection) properties of the materials present in the scene. A real-time render engine is able to generate images of the virtual scene at a high frame rate so that no or little delay between a user input and the updated image is perceived. A mathematical graphics model describes the optical properties of the material.

In one embodiment, the computer system comprises a specific program, called shader, for interpreting the BTF. In a further embodiment, the system comprises an importer and a shader for the render engine.

An importer is a software application that reads a data file or metadata information in one format and converts it to another format via special algorithms (such as filters). An importer often is not an entire program by itself, but an extension to another program, implemented as a plug-in. When implemented in this way, the importer reads the data from the file and converts it into the hosting application's native format. The role of the importer is to read the information on the BTF from a file and feed it to the shader. If the shader uses a limited BTF model, then the importer has to translate the parameters of the full BTF model to the limited model. This is done by optimizing the parameters of the limited model so that the reflectivity for a set of measurement geometries is as similar as possible to the reflectivity of the full BTF model. In one embodiment of the computer system, the importer is configured to read the BTF from a file and translate the parameters of the BTF to the parameters of the texture function used by the shader.

The importer reads the information from the BTF and provides it to the specific shader for the render engine. If the shader cannot interpret the full graphics model incorporated in the BTF and uses a simplified model, translation of the information in the BTF by the importer is necessary.

A shader is a type of computer program originally used for shading in 3D scenes (the production of appropriate levels of light, darkness, and color in a rendered image), but now performs a variety of specialized functions in various fields within the category of computer graphics special effects. Beyond simple lighting models, more complex uses of shaders include: altering the hue, saturation, brightness (HSL/HSV) or contrast of an image; producing blur, light bloom, volumetric lighting, normal mapping (for depth effects), bokeh, cel shading, posterization, bump mapping, distortion, chroma keying (for so-called "bluescreen/greenscreen" effects), edge and motion detection, as well as psychedelic effects.

Shaders describe the traits of either a vertex or a pixel. Vertex shaders describe the attributes (position, texture coordinates, colors, etc.) of a vertex, while pixel shaders describe the traits (color, z-depth and alpha value) of a pixel. A vertex shader is called for each vertex in a primitive (possibly after tessellation); thus one vertex in, one (updated) vertex out. Each vertex is then rendered as a series of pixels onto a surface (block of memory) that will eventually be sent to the screen.

In the context of the present disclosure, a fragment shader is mainly used. Special code for a vertex shader is only needed as the vertex shader has to prepare some input data for the fragment shader.

Fragment shaders compute color and other attributes of each "fragment": a unit of rendering work affecting at most a single output pixel. The simplest kinds of fragment shaders output one screen pixel as a color value; more complex shaders with multiple inputs/outputs are also possible. Fragment shaders range from simply always outputting the same color, to applying a lighting value, to doing bump mapping, shadows, specular highlights, translucency and other phenomena. They can alter the depth of the fragment (for Z-buffering), or output more than one color if multiple render targets are active.

Vertex shaders are run once for each vertex given to the graphics processor. The purpose is to transform each vertex's 3D position in virtual space to the 2D coordinate at which it appears on the screen (as well as a depth value for the Z-buffer). Vertex shaders can manipulate properties such as position, color and texture coordinates, but cannot create new vertices.

In one embodiment, the computer system provides a plug-in for at least one rendering software application such as V-ray or LuxCoreRender, and/or at least one game engine, such as Unreal Engine or Unity.

In one embodiment, the computer system provides a plug-in for Unity. Unity is a cross-platform game engine developed by Unity Technologies. The engine can be used to create three-dimensional, two-dimensional, virtual reality, and augmented reality games, as well as simulations and other experiences. The engine has been adopted by industries outside video gaming, such as film, automotive, architecture, engineering and construction.

The computer system may include or may be in communication with one or more output units, such as a video output, screen/display output, an artificial reality (AR) or virtual reality (VR) output and/or the like.

Embodiments of the invention may be used with or incorporated in a computer system that may be a standalone unit or include one or more remote terminals or devices in communication with a central computer, located, for example, in a cloud, via a network such as, for example, the Internet or an intranet. As such, the computing device / the computing unit described herein and related components may be a portion of a local computer system or a remote computer or an online system or a combination thereof. The database and software described herein may be stored in computer internal memory or in a non-transitory computer readable medium.

The present disclosure provides a rendering application enabling a user to create an image or animation of a virtual car paint applied to a 3D object. These images can be used during the design process to preview the appearance of the paint on a car shape. The method and system of the present disclosure provide a more realistic and plausible digital representation of a car paint's sparkling. This facilitates the virtual review of new car paints during the design phase. Using virtual color at this point has the potential to speed up the color design process and to save cost and resources otherwise required for the spray out of physical samples.

Further aspects of the invention will be realized and attained by means of the elements and combinations particularly depicted in the appended claims. It is to be understood that the description is exemplary and explanatory only and does not restrict the invention as described.

**Brief description of the drawings**

Fig. 1    shows an image interpolated by linear interpolation (middle) of two exemplary texture images (left, right), and the corresponding intensity histogram (bottom);

Fig. 2    shows an image interpolated using the interpolation scheme of the present disclosure (middle) from the exemplary texture images (left, right) of Fig. 1, and the corresponding intensity histogram (bottom).

**Detailed description of the drawings**

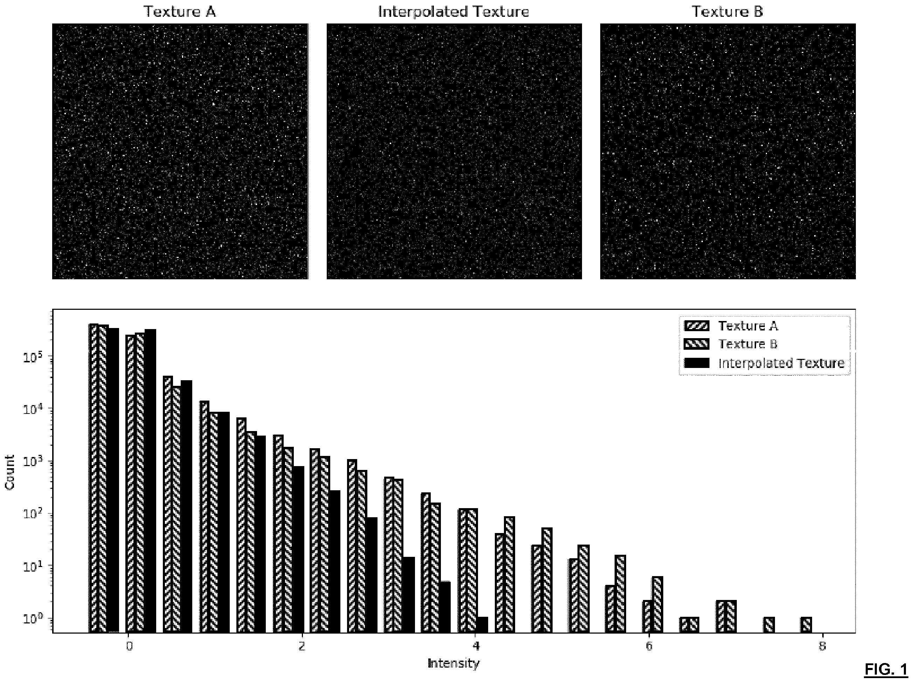

Figure 1 shows two exemplary texture images (Texture A, Texture B) of a car paint comprising sparkle pigments. The image in the top center (Interpolated Texture) has been generated from Texture A and Texture B by linear interpolation.

The corresponding intensity histogram of the images is shown in the lower part of Fig. 1. In each bar of the histogram, the number of pixels having a given intensity is displayed. Each bar is comprised of three columns representing, from left to right, the values for Texture A, Texture B, and the Interpolated Texture, respectively. The histogram clearly shows the reduced contrast of the linearly interpolated texture image.

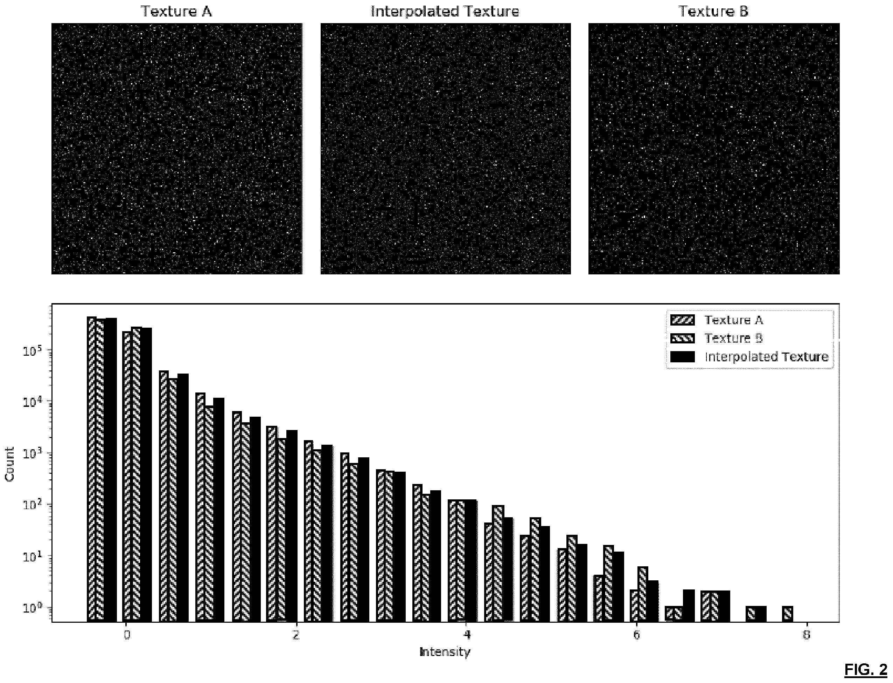

Figure 2 again shows the two exemplary texture images (Texture A, Texture B) of Figure 1. The image in the top center (Interpolated Texture) has been generated from Texture A and Texture B by the interpolation scheme of the present disclosure.

The corresponding intensity histogram of the images is shown in the lower part of Fig. 2. As in Fig. 1, each bar of the histogram is comprised of three columns representing, from left to right, the values for Texture A, Texture B, and the Interpolated Texture, respectively. The histogram clearly shows that contrast and intensity gradient are preserved in the interpolated image.

**Claims**

1. A computer-implemented method for generating a digital representation of a car part coated with a paint comprising effect pigments, the method involving using a bi-directional texture function (BTF) of the paint which comprises a plurality of texture images representing the sparkling of the paint's effect pigments for different viewing and illumination directions for simulating the appearance of the paint on a 3D object using rendering software, **characterized in that** a smoothstep function $S_1(x) = S_1\left(x^+(x^*, t_n, w)\right) = S_1\left(\frac{x^* - t_n + \frac{w}{2}}{w}\right)$ in an interval with width w around a random transition point $t_n$ is used to interpolate pixel intensities at the local coordinate $x^*$ between the plurality of texture images, wherein the transition point $t_n$ is randomly chosen in the interval [w/2, 1 - w/2] once for every pixel in the texture image, the smoothstep function takes the form

$$S_1(x) = \begin{cases} 0 & x \leq 0 \\ 3x^2 - 2x^3 & 0 < x < 1 \\ 1 & 1 \leq x \end{cases}$$

$$S_1(x, y) = S_1(x) \cdot S_1(y),$$

and the interpolated pixel intensity is calculated according to

$$I(\theta_i^+, \theta_h^+, x) = S_1(\theta_i^+)S_1(\theta_h^+)I_{00}(x) + S_1(\theta_i^+)S_1(1 - \theta_h^+)I_{01}(x)$$
$$+ S_1(1 - \theta_i^+)S_1(\theta_h^+)I_{10}(x) + S_1(1 - \theta_i^+)S_1(1 - \theta_h^+)I_{11}(x)$$

wherein

$I(\theta_i^+, \theta_h^+, x)$ is the interpolated intensity of a pixel with local coordinates $\theta_i^+, \theta_h^+$ ,x;

$S_1(\theta_n^+)$ is the value of the smoothstep function at local coordinate $\theta_n^+$ ;

$I_{ab}(x)$ is the value of the pixel intensity of neighboring texture image *ab* at pixel location *x*.

2. The method of claim 1, wherein the texture images are sRGB texture images.

3. The method of claim 1 or 2, wherein the BTF has been generated by a method comprising at least the following steps:

   - measuring an initial BTF for the paint using a camera-based measurement device,
   - capturing spectral reflectance data for the paint for a pre-given number of different measurement geometries using a spectrophotometer,
   - adapting the initial BTF to the captured spectral reflectance data, thus, gaining an optimized BTF.

4. The method of claim 3, wherein the camera-based measurement device creates a plurality of images of the object at different viewing angles, at different illumination angles, for different illumination colors and/or for different exposure times, thus providing a plurality of measurement data considering a plurality of combinations of illumination angle, viewing angle, illumination color and/or exposure time.

5. The method of claim 4, wherein the images with different illumination color and different exposure time, but with equal illumination angle and viewing angle are combined to images with high dynamic range, respectively.

6. The method of any one of claims 3 to 5, wherein the initial BTF is segmented into two main terms, a first term being a homogeneous bi-directional reflectance distribution function (BRDF) which describes reflectance properties of the object depending only on the measurement geometry and the second term being a texture function which accounts for a spatially varying appearance of the object.

7. A computer system comprising:

  - a computer unit;
  - a computer readable program with program code stored in a non-transitory computer-readable storage medium, the program code causing the computer unit, when the program is executed on the computer unit,

    to use a bi-directional texture function (BTF) of a paint comprising effect pigments to generate a representation of an object coated with the paint which accurately reproduces the visual appearance of the object at a given viewing and illumination direction of the object,
    the representation being generated using a 3D render engine which interpolates a texture image at the given viewing and illumination direction from texture images present in the BTF representing neighboring viewing and illumination directions using a smoothstep function $S_1(x) = S_1\big(x^+(x^*, t_n, w)\big) = S_1\left(\frac{x^* - t_n + \frac{w}{2}}{w}\right)$ in an interval with width w around a random transition point $t_n$ at the local coordinate x*, wherein the transition point $t_n$ is randomly chosen in the interval [w/2, 1 - w/2] once for every pixel in the texture image, the smoothstep function takes the form

$$S_1(x) = \begin{cases} 0 & x \leq 0 \\ 3x^2 - 2x^3 & 0 < x < 1 \\ 1 & 1 \leq x \end{cases}$$

$$S_1(x, y) = S_1(x) \cdot S_1(y),$$

    and
    the interpolated pixel intensity is calculated according to

$$I(\theta_i^+, \theta_h^+, x) = S_1(\theta_i^+)S_1(\theta_h^+)I_{00}(x) + S_1(\theta_i^+)S_1(1 - \theta_h^+)I_{01}(x)$$
$$+ S_1(1 - \theta_i^+)S_1(\theta_h^+)I_{10}(x) + S_1(1 - \theta_i^+)S_1(1 - \theta_h^+)I_{11}(x)$$

    wherein

    $I(\theta_i^+, \theta_h^+, x)$ is the interpolated intensity of a pixel with local coordinates $\theta_i^+, \theta_h^+$, x;

    $S_1(\theta_n^+)$ is the value of the smoothstep function at local coordinate $\theta_n^+$ ;
    $I_{ab}(x)$ is the value of the pixel intensity of neighboring texture image ab at pixel location x.

8. The computer system of claim 7, wherein the render engine is a real-time render engine.

9. The computer system of claim 7 or 8, further comprising a shader for the render engine.

10. The computer system of claim 9, wherein the shader comprises a fragment shader and a vertex shader.

11. The computer system of claim 9 or 10, further comprising an importer for the shader.

12. The computer system of claim 11, wherein the importer is configured to read the BTF from a file and translate the parameters of the BTF to the parameters of a texture function used by the shader.

**Patentansprüche**

1. Computerimplementiertes Verfahren zum Erzeugen einer digitalen Darstellung eines Autoteils, das mit einem Lack beschichtet ist, der Effektpigmente umfasst, wobei das Verfahren das Verwenden einer bidirektionalen Texturfunktion (BTF) des Lacks umfasst, die mehrere Texturbilder umfasst, die das Glänzen der Effektpigmente des Lacks für unterschiedliche Betrachtungs- und Beleuchtungsrichtungen darstellen, um das Erscheinungsbild des Lacks auf einem 3D-Objekt unter Verwendung von Rendering-Software zu simulieren, **dadurch gekennzeichnet, dass** eine Smoothstep-Funktion $S_1(x) = S_1\big(x^+(x^*, t_n, w)\big) = S_1\left(\frac{x^* - t_n + \frac{w}{2}}{w}\right)$ in einem Intervall mit einer Breite w um einen zufälligen Übergangspunkt $t_n$ verwendet wird, um Pixelintensitäten an der lokalen Koordinate x* zwischen den mehreren Texturbildern zu interpolieren, wobei der Übergangspunkt $t_n$ in dem Intervall [w/2, 1 - w/2] einmal für jedes Pixel in dem Texturbild zufällig gewählt wird, die Smoothstep-Funktion die Form

$$S_1(x) = \begin{cases} 0 & x \leq 0 \\ 3x^2 - 2x^3 & 0 < x < 1 \\ 1 & 1 \leq x \end{cases}$$

$$S_1(x, y) = S_1(x) \cdot S_1(y),$$

aufweist und

die interpolierte Pixelintensität berechnet wird gemäß

$$I(\theta_i^+, \theta_h^+, x) = S_1(\theta_i^+) S_1(\theta_h^+) I_{00}(x) + S_1(\theta_i^+) S_1(1 - \theta_h^+) I_{01}(x)$$
$$+ S_1(1 - \theta_i^+) S_1(\theta_h^+) I_{10}(x) + S_1(1 - \theta_i^+) S_1(1 - \theta_h^+) I_{11}(x)$$

wobei

$I(\theta_i^+, \theta_h^+, x)$ die interpolierte Intensität eines Pixels mit lokalen Koordinaten $\theta_i^+, \theta_h^+$, x; ist;

$S_1(\theta_n^+)$ der Wert der Smoothstep-Funktion bei der lokalen Koordinate $\theta_n^+$ ist;

$I_{ab}(x)$ der Wert der Pixelintensität des benachbarten Texturbilds ab an der Pixelposition x ist.

2. Verfahren nach Anspruch 1, wobei die Texturbilder sRGB-Texturbilder sind.

3. Verfahren nach Anspruch 1 oder 2, wobei die BTF durch ein Verfahren erzeugt wurde, das mindestens die folgenden Schritte umfasst:

   - Messen einer anfänglichen BTF für den Lack mit einer kamerabasierten Messvorrichtung,
   - Erfassen von Spektralreflektanzdaten für den Lack für eine vorgegebene Anzahl verschiedener Messgeometrien unter Verwendung eines Spektralphotometers;
   - Anpassen der anfänglichen BTF an die erfassten Spektralreflektanzdaten, wodurch eine optimierte BTF erhalten wird.

4. Verfahren nach Anspruch 3, wobei die kamerabasierte Messvorrichtung mehrere Bilder des Objekts mit unterschiedlichen Betrachtungswinkeln, mit unterschiedlichen Beleuchtungswinkeln, für unterschiedliche Beleuchtungsfarben und/oder für unterschiedliche Belichtungszeiten erzeugt, wodurch mehrere Messdaten unter Berücksichtigung mehrerer Kombinationen von Beleuchtungswinkel, Betrachtungswinkel, Beleuchtungsfarbe und/oder Belichtungszeit bereitgestellt werden.

5. Verfahren nach Anspruch 4, wobei die Bilder mit unterschiedlicher Beleuchtungsfarbe und unterschiedlicher Belichtungszeit, aber mit gleichem Beleuchtungswinkel und Betrachtungswinkel jeweils zu Bildern mit hohem Dynamikbereich kombiniert werden.

6. Verfahren nach einem der Ansprüche 3 bis 5, wobei die anfängliche BTF in zwei Hauptterme segmentiert wird, wobei ein erster Term eine homogene bidirektionale Reflektanzverteilungsfunktion (BRDF) ist, die Reflektanzeigenschaften des Objekts nur in Abhängigkeit von der Messgeometrie beschreibt, und der zweite Term eine Texturfunktion ist, die ein räumlich variierendes Erscheinungsbild des Objekts berücksichtigt.

7. Computersystem, umfassend:

   - eine Computereinheit;
   - ein computerlesbares Programm mit einem in einem nichtflüchtigen computerlesbaren Speichermedium gespeicherten Programmcode, wobei der Programmcode bei Ausführung des Programms auf der Computereinheit bewirkt, dass die Computereinheit

   eine bidirektionale Texturfunktion (BTF) eines Lacks verwendet, der Effektpigmente umfasst, um eine Darstellung eines mit dem lack beschichteten Objekts zu erzeugen, die das visuelle Erscheinungsbild des Objekts in einer gegebenen Betrachtungs- und Beleuchtungsrichtung des Objekts genau wiedergibt, wobei die Darstellung unter Verwendung einer 3D-Rendering-Engine erzeugt wird, die ein Texturbild in der gegebenen Betrachtungs- und Beleuchtungsrichtung anhand von in der BTF vorhandenen Texturbildern, die benachbarte Betrachtungs- und Beleuchtungsrichtungen darstellen, unter Verwendung einer Smoothstep-Funktion

   $$S_1(x) = S_1\big(x^+(x^*, t_n, w)\big) = S_1\left(\frac{x^* - t_n + \frac{w}{2}}{w}\right)$$ in einem Intervall mit einer Breite w um einen zufälligen

   Übergangspunkt $t_n$ an der lokalen Koordinate $x^*$ interpoliert, wobei der Übergangspunkt $t_n$ in dem Intervall [w/2, 1 - w/2] einmal für jedes Pixel in dem Texturbild zufällig gewählt wird, die Smoothstep-Funktion die Form

   $$S_1(x) = \begin{cases} 0 & x \leq 0 \\ 3x^2 - 2x^3 & 0 < x < 1 \\ 1 & 1 \leq x \end{cases}$$

   $S_1(x, y) = S_1(x) \cdot S_1(y)$ aufweist und
   die interpolierte Pixelintensität berechnet wird gemäß

   $$I(\theta_i^+, \theta_h^+, x) = S_1(\theta_i^+)S_1(\theta_h^+)I_{00}(x) + S_1(\theta_i^+)S_1(1 - \theta_h^+)I_{01}(x)$$
   $$+ S_1(1 - \theta_i^+)S_1(\theta_h^+)I_{10}(x) + S_1(1 - \theta_i^+)S_1(1 - \theta_h^+)I_{11}(x)$$

   wobei

   $I(\theta_i^+, \theta_h^+, x)$ die interpolierte Intensität eines Pixels mit lokalen Koordinaten $\theta_i^+, \theta_h^+$, x; ist;

   $S_1(\theta_n^+)$ der Wert der Smoothstep-Funktion bei der lokalen Koordinate $\theta_n^+$; ist;

   $I_{ab}(x)$ der Wert der Pixelintensität des benachbarten Texturbilds ab an der Pixelposition x ist.

8. Computersystem nach Anspruch 7, wobei die Rendering-Engine eine Echtzeit-Rendering-Engine ist.

9. Computersystem nach Anspruch 7 oder 8, ferner umfassend einen Shader für die Rendering-Engine.

10. Computersystem nach Anspruch 9, wobei der Shader einen Fragment-Shader und einen Vertex-Shader umfasst.

11. Computersystem nach Anspruch 9 oder 10, ferner umfassend einen Importer für den Shader.

12. Computersystem nach Anspruch 11, wobei der Importer dazu ausgelegt ist, die BTF aus einer Datei zu lesen und die Parameter der BTF in die Parameter einer durch den Shader verwendeten Texturfunktion zu übersetzen.

**Revendications**

1. Procédé mis en œuvre par ordinateur pour générer une représentation numérique d'une pièce de voiture revêtue d'une peinture comprenant des pigments à effet, le procédé impliquant l'utilisation d'une fonction de texture bidirectionnelle (Bi-directional Texture Function, BTF) de la peinture qui comprend une pluralité d'images de texture représentant l'étincellement des pigments à effet de la peinture pour des directions de vision et d'illumination différentes, pour simuler l'apparence de la peinture sur un objet 3D en utilisant un logiciel de rendu, **caractérisé en ce**

   **qu'**une fonction Smoothstep $S_1(x) = S_1\big(x^+(x^*, t_n, w)\big) = S_1\left(\frac{x^* - t_n + \frac{w}{2}}{w}\right)$ dans un intervalle avec une largeur w autour d'un point de transition aléatoire $t_n$ est utilisée pour interpoler des intensités de pixel à la cordonnée locale $x^*$ entre la pluralité d'images de texture, dans lequel le point de transition $t_n$ est choisi de façon aléatoire dans l'intervalle [w/2,1 - w/2] une fois pour chaque pixel dans l'image de texture, la fonction Smoothstep adopte la forme

   $$S_1(x) = \begin{cases} 0 & x \leq 0 \\ 3x^2 - 2x^3 & 0 < x < 1 \\ 1 & 1 \leq x \end{cases}$$

   $$S_1(x, y) = S_1(x) \cdot S_1(y),$$

   et

   l'intensité de pixel interpolée est calculée selon

   $$l(\theta_i^+, \theta_h^+, x) = S_1(\theta_i^+)S_1(\theta_h^+)I_{00}(x) + S_1(\theta_i^+)S_1(1 - \theta_h^+)I_{01}(x)$$
   $$+ S_1(1 - \theta_i^+)S_1(\theta_h^+)I_{10}(x) + S_1(1 - \theta_i^+)S_1(1 - \theta_h^+)I_{11}(x)$$

   dans lequel

   $l(\theta_i^+, \theta_h^+, x)$ est l'intensité interpolée d'un pixel avec des coordonnées locales $\theta_i^+, \theta_h^+, x$ ; ;

   $S_1(\theta_n^+)$ est la valeur de la fonction Smoothstep à la coordonnée locale $\theta_n^+$ ;

   $I_{ab}(x)$ est la valeur de l'intensité de pixel d'image de texture voisine ab à l'emplacement de pixel x.

2. Procédé de la revendication 1, dans lequel les images de texture sont des images de texture sRGB.

3. Procédé de la revendication 1 ou 2, dans lequel la BTF a été générée par un procédé comprenant au moins les étapes suivantes :

   - la mesure d'une BTF initiale pour la peinture en utilisant un dispositif de mesure à base de caméra,
   - la capture de données de réflectance spectrale pour la peinture pour un nombre préalablement donné de géométries de mesure différentes, en utilisant un spectrophotomètre,
   - l'adaptation de la BTF initiale aux données de réflectance spectrale capturées, obtenant ainsi une BTF optimisée.

4. Procédé de la revendication 3, dans lequel le dispositif de mesure à base de caméra crée une pluralité d'images de l'objet à des angles de vision différents, à des angles d'illumination différents, pour des couleurs d'illumination différentes et/ou pour des temps d'exposition différents, fournissant ainsi une pluralité de données de mesure considérant une pluralité de combinaisons d'angle d'illumination, d'angle de vision, de couleur d'illumination et/ou de temps d'exposition.

5. Procédé de la revendication 4, dans lequel les images avec une couleur d'illumination différente et un temps d'exposition différent, mais avec un angle d'illumination et un angle de vision égaux, sont combinées en images avec une haute gamme dynamique, respectivement.

6. Procédé de l'une quelconque des revendications 3 à 5, dans lequel la BTF initiale est segmentée en deux termes principaux, un premier terme étant une fonction de distribution de réflectance bidirectionnelle (Bi-directional Reflectance Distribution Function, BRDF) homogène qui décrit des propriétés de réflectance de l'objet en fonction seulement de la géométrie de mesure, et le second terme étant une fonction de texture qui tient compte d'une apparence variant spatialement de l'objet.

7. Système d'ordinateur, comprenant :

   - une unité d'ordinateur ;
   - un programme lisible par ordinateur avec un code de programme stocké dans un support de stockage non transitoire lisible par ordinateur, le code de programme amenant l'unité d'ordinateur, lorsque le programme est exécuté sur l'unité d'ordinateur,
   à utiliser une fonction de texture bidirectionnelle (Bi-directional Texture Function, BTF) d'une peinture comprenant des pigments à effet pour générer une représentation d'un objet revêtu de la peinture qui reproduit avec précision l'apparence visuelle de l'objet à une direction donnée de vision et d'illumination de l'objet,
   la représentation étant générée en utilisant un moteur de rendu 3D qui interpole une image de texture à la direction donnée de vision et d'illumination à partir d'images de texture présentes dans la BTF représentant des directions de vision et d'illumination voisines en utilisant une fonction Smoothstep

   $$S_1(x) = S_1\left(x^+(x^*, t_n, w)\right) = S_1\left(\frac{x^* - t_n + \frac{w}{2}}{w}\right)$$ dans un intervalle avec une largeur w autour d'un point

   de transition aléatoire $t_n$ à la coordonnée locale $x^*$, dans lequel le point de transition $t_n$ est choisi de façon aléatoire dans l'intervalle [w/2, 1 - w/2] une fois pour chaque pixel dans l'image de texture, la fonction Smoothstep adopte la forme

   $$S_1(x) = \begin{cases} 0 & x \leq 0 \\ 3x^2 - 2x^3 & 0 < x < 1 \\ 1 & 1 \leq x \end{cases}$$

   $$S_1(x, y) = S_1(x) \cdot S_1(y),$$

   et
   l'intensité de pixel interpolée est calculée selon

   $$I(\theta_i^+, \theta_h^+, x) = S_1(\theta_i^+)S_1(\theta_h^+)I_{00}(x) + S_1(\theta_i^+)S_1(1 - \theta_h^+)I_{01}(x)$$
   $$+ S_1(1 - \theta_i^+)S_1(\theta_h^+)I_{10}(x) + S_1(1 - \theta_i^+)S_1(1 - \theta_h^+)I_{11}(x)$$

   dans lequel

   $I(\theta_i^+, \theta_h^+, x)$ est l'intensité interpolée d'un pixel avec des coordonnées locales $\theta_i^+, \theta_h^+, x$;

   $S_1(\theta_n^+)$ est la valeur de la fonction Smoothstep à la coordonnée locale $\theta_n^+$ ;

   $I_{ab}(x)$ est la valeur de l'intensité de pixel d'image de texture voisine ab à l'emplacement de pixel x.

8. Système d'ordinateur de la revendication 7, dans lequel le moteur de rendu est un moteur de rendu en temps réel.

9. Système d'ordinateur de la revendication 7 ou 8, comprenant en outre un nuanceur pour le moteur de rendu.

10. Système d'ordinateur de la revendication 9, dans lequel le nuanceur comprend un nuanceur de fragment et un nuanceur de sommet.

11. Système d'ordinateur de la revendication 9 ou 10, comprenant en outre un importateur pour le nuanceur.

12. Système d'ordinateur de la revendication 11, dans lequel l'importateur est configuré pour lire la BTF à partir d'un fichier et traduire les paramètres de la BTF en les paramètres d'une fonction de texture utilisée par le nuanceur.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2020058444 W
- EP 20182808

- US 5966134 A

### Non-patent literature cited in the description

- **DANA, KRISTIN J.** ; **BRAM VAN GINNEKEN** ; **SHREE K.** ; **NAYAR** ; **JAN J. KOENDERINK.** Reflectance and Texture of Real-World Surfaces. *ACM Transactions on Graphics*, 01 January 1999, vol. 18 (1), 1-34, https://doi.org/10.1145/300776.300778.)
- **TIM GOLLA et al.** Interactive Interpolation of Metallic Effect Car Paints. *Modeling and Visualization*, January 2018

- **RUMP** ; **MARTIN** ; **RALF SARLETTE** ; **REINHARD KLEIN**. Efficient Resampling, Compression and Rendering of Metallic and Pearlescent Paint. *Vision, Modeling, and Visualization*, 2009, 11-18
- **LEE** ; **SEUNGYONG** ; **GEORGE WOLBERG** ; **SUNG YONG SHIN**. Scattered data interpolation with multilevel B-splines. *IEEE transactions on visualization and computer graphics*, 1997, vol. 3 (3), 228-244